# FASCICULE DE BREVET EUROPEEN

(11) **EP 1 122 475 B1**
(45) Date de publication et mention de la délivrance du brevet: **20.10.2004**
(21) Numéro de dépôt: 01440018.8
(22) Date de dépôt: 29.01.2001
(51) Int. Cl.: F16K 17/30

(54) **Dispositif d'obturation de sécurité pour conduites**
Sicherheitsventil
Safety valve

(30) Priorité: 01.02.2000 FR 0001258
(43) Date de publication de la demande: 08.08.2001
(73) Titulaire: T D Williamson France SA (Société Anonyme), 67800 Bischheim (FR)
(72) Inventeur: Cartereau, Sylvain, 67210 Valff (FR); Andris, Thierry, 67870 Bischoffsheim (FR)
(74) Mandataire: Nuss, Pierre

(56) Documents cités:
- DE-A- 2 924 533
- US-A- 3 872 884
- US-A- 4 129 144
- US-A- 4 257 443
- US-A- 5 293 898
- US-A- 5 551 476

## Description

La présente invention concerne le domaine de la circulation de fluide gazeux dans des conduits, notamment les réseaux de distribution de gaz naturel aux particuliers, et a pour objet un dispositif d'obturation de sécurité, pour la coupure de l'écoulement gazeux en cas de fuite ou de dépression importante en aval.

On connaît déjà actuellement divers dispositifs de sécurité du type précité, qui obture brutalement le passage d'écoulement du gaz dans une portion de conduite donnée lorsque le débit dépasse une valeur seuil.

Ainsi, par le document EP-A-0 491 027, on connaît un dispositif de fermeture de sécurité, destiné à être monté dans un conduit transportant un fluide gazeux.

Ce dispositif comprend, d'une part, un corps en forme de manchon tubulaire, pouvant être installé de manière fixe et avec une étanchéité extérieure dans une portion de conduit, et, d'autre part, un élément formant soupape et mobile par rapport audit corps, la tête de soupape présentant une section transversale inférieure à la section de passage de ladite portion de conduit, mais adaptée pour obturer de manière étanche, par coopération de formes, l'une des ouvertures dudit corps, et étant sollicitée, sous l'action d'une force élastique, vers une position d'ouverture calée, située à distance de l'ouverture à obturer en direction amont par rapport à l'écoulement normal du fluide gazeux.

Ce dispositif connu présente toutefois un inconvénient majeur, à savoir que le ressort de compression générant la force élastique est situé dans le passage formé par le corps tubulaire et constitue, par conséquent, un élément perturbateur du flux, empêchant la création ou la reconstitution d'un écoulement laminaire à ce niveau, et introduisant une perte de charge.

En outre, ledit ressort est logé dans un boîtier relié au corps tubulaire par des ailes de fixation et à la tête de soupape par une queue centrale, ce qui accroît davantage encore la perturbation de l'écoulement et complique la fabrication du dispositif, et induit une perte de charge.

Par le document US-A-3 872 884, on connaît déjà un dispositif d'obturation sensiblement du type correspondant au préambule de la revendication 1 annexée.

Toutefois, le montage du dispositif précité est délicat puisque du fait de sa constitution, le ressort doit être monté en premier et être maintenu comprimé lors du montage de l'élément formant soupape, et le cas échéant de la bague d'arrêt de cette dernière.

En outre, les pattes de l'élément formant soupape subissent une déformation importante lors du montage dudit élément dans le corps en forme de manchon, qui peut être préjudiciable pour leur tenue dans le temps.

Enfin, aucun guidage longitudinal de l'élément formant soupape dans le corps en forme de manchon n'est prévu dans ce dispositif connu.

La présente invention a notamment pour but de pallier les différents inconvénients évoqués ci-dessus.

Ce but est atteint grâce aux caractéristiques mentionnées dans la partie caractérisante de la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale et en coupe longitudinale d'un dispositif d'obturation de sécurité en position d'ouverture, selon un premier mode de réalisation de l'invention ;
la figure 2 est une vue de dessous du dispositif représenté sur la figure 1 ;
la figure 3 est une vue en élévation latérale d'un élément de soupape faisant partie du dispositif représenté sur les figures 1 et 2 ;
la figure 4 est une vue en élévation latérale et en coupe longitudinale d'un dispositif d'obturation de sécurité en position d'ouverture, selon un second mode de réalisation de l'invention ;
la figure 5 est une vue de dessous du dispositif représenté sur la figure 4 ;
la figure 6 est une vue en élévation latérale d'un élément formant soupape faisant partie du dispositif représenté sur les figures 4 et 5, et,
la figure 7 est une vue en élévation latérale du corps tubulaire du dispositif représenté sur les figures 4 et 5.

Comme le montrent les figures des dessins annexés, le dispositif d'obturation de sécurité 1, destiné à être monté dans un conduit transportant un fluide gazeux, comprend, d'une part, un corps 2 en forme de manchon tubulaire, pouvant être installé de manière fixe et avec une étanchéité extérieure 3 dans une portion de conduit, et, d'autre part, un élément 4 formant soupape et mobile par rapport audit corps 2, la tête de soupape 5 présentant une section transversale inférieure à la section de passage de ladite portion de conduit, mais adaptée pour obturer de manière étanche, par coopération de formes, l'une 2' des ouvertures dudit corps 2, et étant sollicitée, sous l'action d'une force élastique, vers une position d'ouverture calée, située à distance de l'ouverture 2' à obturer en direction amont par rapport à l'écoulement normal du fluide gazeux.

Conformément à l'invention, la tête de soupape 5 est prolongée par au moins trois pattes 6 s'étendant le long de la paroi interne du corps 2 en forme de manchon tubulaire et guidées en translation, au niveau de leurs extrémités libres 6' pourvues de patins de guidage 7 adaptés, dans des segments de rainures 8 ou de fentes 9 longitudinales correspondantes ménagées dans la paroi d'une portion aval 2" du corps 2, attenante à l'ouverture aval opposée à l'ouverture amont 2' pouvant être obturée par la tête de soupape 5, la force élastique étant produite par un ressort de compression 10 à boudin monté dans ladite portion aval 2" du corps 2, dont les spires 10' sont plaquées contre la paroi interne de ladite portion aval 2" et qui prend appui sous pression sur les extrémités libres 6' des pattes 6 pour solliciter l'élément formant soupape 4 dans sa position d'ouverture calée.

Par ces dispositions, entraînant un déplacement des pattes 6 formant queue de soupape et du ressort de compression 10 vers la périphérie du passage d'écoulement du fluide gazeux dans le corps 2 en forme de manchon tubulaire, on libère sensiblement la totalité de la section de passage, en éliminant presque totalement tout obstacle perturbateur du flux et en autorisant, déjà au niveau du corps 2, l'établissement ou le rétablissement d'un flux laminaire en position ouverte du dispositif d'obturation 1.

Dans cette dernière position, le flux gazeux passe entre le bord latéral de la tête de soupape et la portion de conduit recevant le dispositif 1.

Toutefois, lorsque le débit gazeux dépasse une valeur seuil, correspondant à une pression d'intensité donnée sur la tête 5 de l'élément 4 formant soupape, légèrement supérieure à la pression exercée par le ressort de compression 10 sur les pattes 6, ledit élément 4 formant soupape est brutalement déplacé de sa position d'ouverture vers une position de fermeture dans laquelle il repose sur le bord de l'ouverture amont 2' et obture de manière étanche cette dernière.

Bien entendu, cette valeur seuil de pression et donc de débit peut être calibrée en fonction du coefficient d'élasticité et du dimensionnement du ressort de compression 10 utilisé.

En outre, on notera que la tête de soupape 5 pourra présenter au niveau de son côté frontal ou amont différents profils en fonction, le cas échéant, de la nature du fluide et des caractéristiques d'écoulement dans la portion de conduit concerné, à savoir un profil en forme de pointe, en forme de demi-sphère, en forme de dôme plus ou moins aplati, en forme de plateau à bord arrondi, ou analogue.

Conformément à une caractéristique de l'invention, permettant de minimiser les perturbations du flux gazeux dans le corps 2, la portion aval 2" de ce dernier 2 peut présenter un diamètre intérieur supérieur à celui de la portion amont 2''' du corps 2, de manière à créer un renfoncement interne annulaire 11 dans la paroi de cette portion du corps 2 pour une réception effacée du ressort de compression 10.

Avantageusement, la profondeur de renfoncement pourra correspondre au diamètre des spires 10' du ressort 10, de telle manière que la face interne desdites spires soit de niveau avec la paroi interne de l'extrémité aval de la portion amont 2"' du corps 2.

En outre, pour garantir un plaquage intime des spires 10' contre la paroi de renfoncement 11, le diamètre externe du ressort pourra éventuellement être légèrement supérieur au diamètre interne dudit renfoncement de telle manière que ce dernier soit mis en place et installé dans ledit corps 2 suite à une légère contraction radiale.

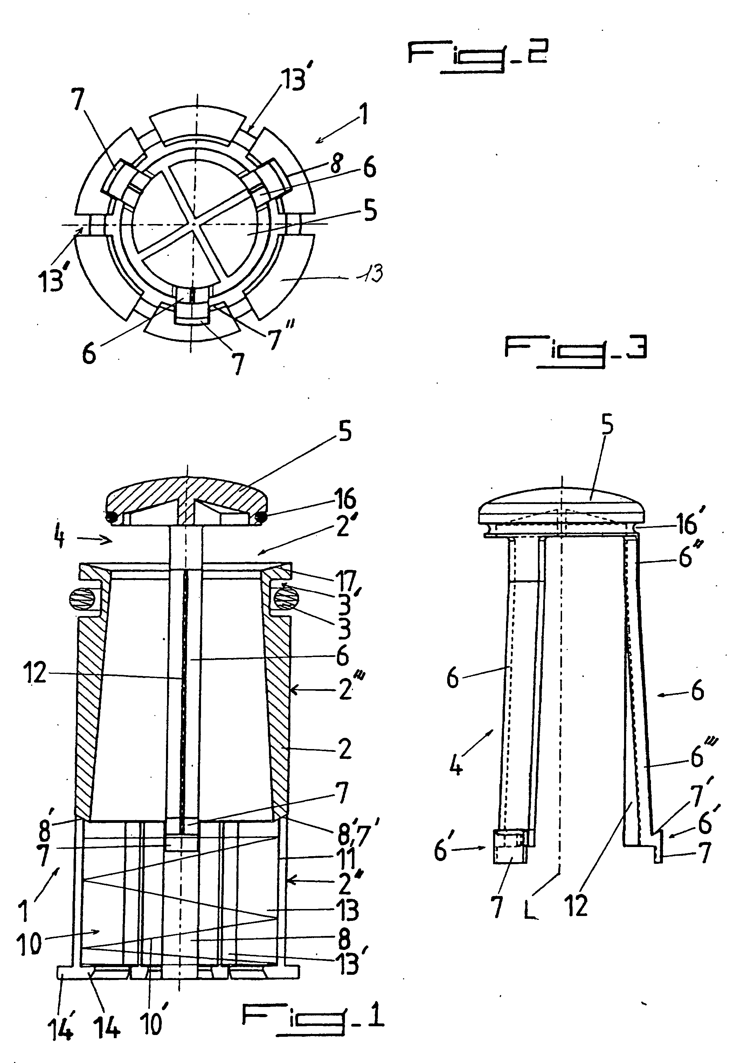

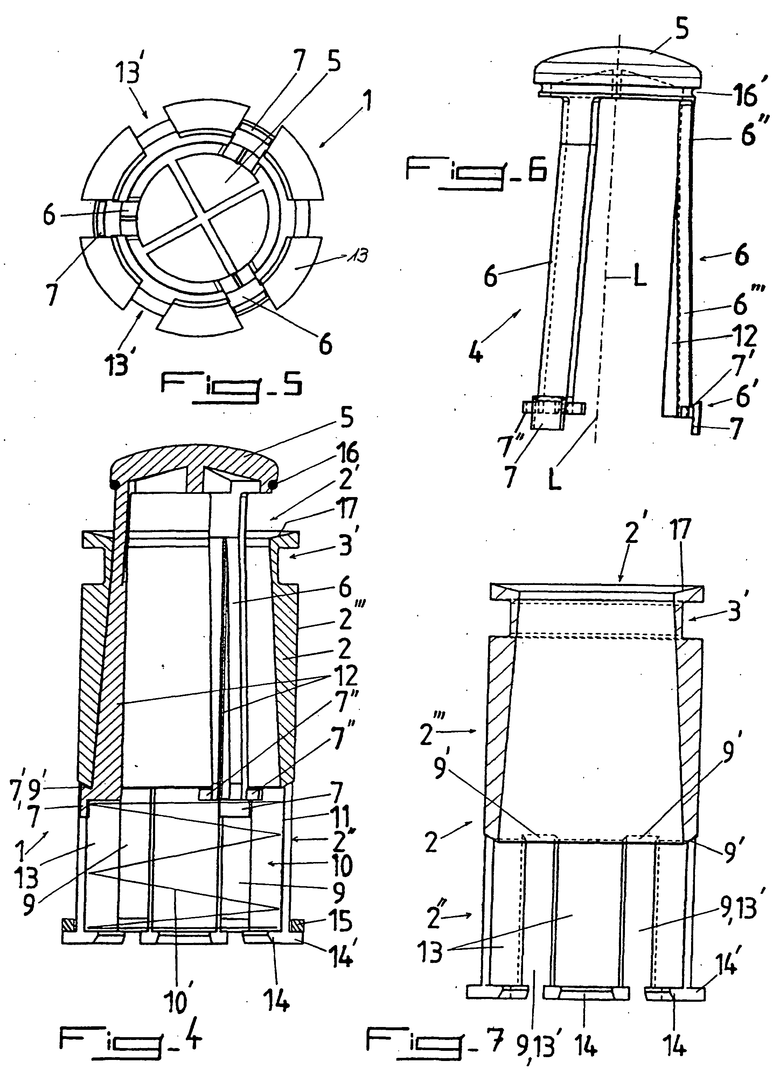

Selon un mode de réalisation préféré de l'invention, représenté notamment aux figures 2, 3, 5 et 6 des dessins annexés, l'élément formant soupape 4 comporte trois pattes 6 longitudinales réparties de manière équiangulaire autour de la tête de soupape 5, présentant chacune une structure lamellaire allongée ou en forme de languette, le cas échéant renforcée par une nervure 12 sur sa face interne, dont la section s'accroît en direction de l'extrémité 6' et qui fournit, en association avec cette dernière, une zone d'appui à extension radiale pour le ressort de compression 10.

Pour garantir simultanément, d'une part, un déplacement aisé de l'élément 4 formant soupape de sa position de fermeture vers sa position d'ouverture et vice versa et, d'autre part, une application intime des pattes contre la paroi interne du corps 2, lesdites pattes 6 présentent chacune, en partant de la tête de soupape 5, d'une part, une première partie droite 6" sensiblement parallèle à l'axe longitudinal L de l'élément en forme de soupape 4 et correspondant à la portion desdites pattes 6 qui dépasse du corps 2 lorsque l'élément en forme de soupape 4 est situé en position d'ouverture calée et, d'autre part, une seconde partie droite 6''' faisant suite à la première partie 6" et s'étendant jusqu'à l'extrémité libre 6' inclinée vers l'extérieur ou divergente par rapport à l'axe longitudinal L en direction de ladite extrémité 6'.

Les secondes parties 6''' des pattes 6' sont par conséquent soumises à une légère compression élastique après leur introduction dans le corps 2, ce qui entraîne un maintien sous pression des patins 7 dans les portions de rainures 8 et de fentes 9 et évite leur extraction de ces derniers, notamment en cours d'un mouvement en translation de l'élément 4 en forme de soupape.

Conformément à une variante de réalisation préférentielle de l'invention, représentée notamment sur les figures 1, 3, 4, 6 et 7 des dessins annexés, les patins de guidage 7 sont formés sur les extrémités libres 6' des pattes 6 en étant radialement proéminents vers l'extérieur et en définissant chacun un décrochement radial 7' en direction de la tête de soupape 5, lesdits décrochement 7' venant en butée contre les bords formant les limites amont 8', 9' des segments de rainures 8 ou de fentes 9 de guidage correspondants lorsque l'élément formant soupape 4 arrive en position d'ouverture calée.

Ainsi, ladite position d'ouverture, de même que la section de passage à l'ouverture peut être définie très précisément en ajustant la longueur des pattes 6 et la position longitudinale des bords 8' ou 9' des segments de rainures 8 ou de fentes 9.

En vue d'éviter une extraction totale de l'élément 4 en forme de soupape du corps 2 sous l'effet du ressort de compression 10, il peut être avantageusement prévu que les décrochements radiaux 7' des extrémités libres 6' des pattes 6, d'une part, et les bords 8', 9' formant les limites amont des segments de rainures 8 ou de fentes 9 de guidage, d'autre part, présentent en section des faces frontales à inclinaisons opposées, de manière à obtenir, lorsqu'ils sont mutuellement en butée, une liaison par accrochage de crans complémentaires (voir figures 3, 6 et 7).

En vue de permettre une installation et un calage aisés du dispositif 1 dans la portion de conduit concernée, d'éviter un dysfonctionnement (par exemple par grippage) dudit dispositif 1 en cas d'application de chaleur ou de pression lors de l'installation et d'assurer un montage et une rétention sûre du ressort de compression 10, la portion aval 2" du corps 2 en forme de manchon tubulaire est composée de plusieurs languettes 13 séparées par des fentes longitudinales 13', dont certaines constituent, le cas échéant, des segments de fentes de guidage 9 pour les patins 7 formés sur les extrémités libres 6' des pattes 6 de l'élément en forme de soupapes 4, chaque languette 13 présentant, au niveau de son extrémité libre un rebord intérieur 14 pour l'appui du ressort de compression 10 et un rebord extérieur 14' pour la rétention et le calage d'un anneau de serrage 15 maintenant les languettes 13 à l'intérieur d'un périmètre circulaire limite.

Lorsque les patins 7 sont guidés dans des segments de fentes 9, ils sont en outre pourvus d'ailettes latérales 7" venant en appui sur la face interne des languettes 13 adjacentes aux fentes de guidage 9 et assurant un guidage radial desdits patins 7 en association avec le guidage longitudinal assuré par lesdites fentes 9.

Comme le montrent les figures 1 et 4 des dessins annexés, ainsi qu'en partie les figures 3, 6 et 7, l'étanchéité entre la tête de soupape 5 et le corps 2 en forme de manchon, en position d'obturation rétractée de l'élément formant soupape 4, peut être réalisée par l'intermédiaire d'un joint torique 16 monté dans une rainure circonférentielle 16' s'étendant au niveau du bord latéral inférieur de ladite tête de soupape 5 venant en appui sur une surface annulaire inclinée 17 délimitant l'ouverture amont 2' dudit corps 2 et formant siège de soupape.

En outre, l'étanchéité entre le corps 2 en forme de manchon tubulaire ou de douille et la portion de conduit dans laquelle il est logé, peut être réalisé par l'intermédiaire d'un joint torique 3 monté dans une rainure circonférentielle extérieure 3' ménagée dans ledit corps 2 (voir figure 1).

De manière préférentielle, le corps 2 en forme de manchon tubulaire et l'élément formant soupape 4 sont réalisés, par exemple par moulage par injection, en un matériau synthétique rigide (mais néanmoins faiblement élastique sous forme d'éléments allongés et de faible épaisseur) et chimiquement insensible au fluide gazeux qui le traverse, ledit corps 2 présentant un passage intérieur s'élargissant coniquement, selon un angle d'environ 5°, sur une partie au moins de sa portion amont 2"' s'étendant jusqu'à sa portion aval 2".

Cet élargissement conique contribuera de manière favorable au rétablissement d'un flux laminaire dans le corps 2.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'obturation de sécurité, à passage intégral, destiné à être monté dans un conduit transportant un fluide gazeux, comprenant, d'une part, un corps (2) en forme de manchon tubulaire, pouvant être installé de manière fixe et avec une étanchéité extérieure dans une portion de conduit, et, d'autre part, un élément (4) formant soupape et mobile par rapport audit corps, la tête de soupape (5) présentant une section transversale inférieure à la section de passage de ladite portion de conduit, mais adaptée pour obturer de manière étanche, par coopération de formes, l'une des ouvertures dudit corps, et étant sollicitée, sous l'action d'une force élastique, vers une position d'ouverture calée, située à distance de l'ouverture à obturer en direction amont par rapport à l'écoulement normal du fluide gazeux, dispositif d'obturation (1) dans lequel la tête de soupape (5) est prolongée par au moins trois pattes (6) s'étendant le long de la paroi interne du corps (2) en forme de manchon tubulaire et guidées en translation, au niveau de leurs extrémités libres (6') pourvues de patins de guidage (7) adaptés, dans des segments de rainures (8) ou de fentes (9) longitudinales correspondantes ménagées dans la paroi d'une portion aval (2") du corps (2), attenante à l'ouverture aval opposée à l'ouverture amont (2') pouvant être obturée par la tête de soupape (5), la force élastique étant produite par un ressort de compression (10) à boudin monté dans ladite portion aval (2") du corps (2), dont les spires (10') sont plaquées contre la paroi interne de ladite portion aval (2") et qui prend appui sous pression sur les extrémités libres (6') des pattes (6) pour solliciter l'élément formant soupape (4) dans sa position d'ouverture calée,
dispositif **caractérisé en ce que** la portion aval (2") du corps (2) en forme de manchon tubulaire est composée de plusieurs languettes (13) séparées par des fentes longitudinales (13'), dont certaines constituent des segments de fentes de guidage (9) pour les patins (7) formés sur les extrémités libres (6') des pattes (6) de l'élément en forme de soupapes (4), chaque languette (13) présentant, au niveau de son extrémité libre un rebord intérieur (14) pour l'appui du ressort de compression (10) et un rebord extérieur (14') pour la rétention et le calage d'un anneau de serrage (15) maintenant les languettes (13) à l'intérieur d'un périmètre circulaire limite.

2. Dispositif selon la revendication 1, **caractérisé en ce que** la portion aval (2") du corps (2) présente un diamètre intérieur supérieur à celui de la portion amont (2''') du corps (2), de manière à créer un renfoncement interne annulaire (11) dans la paroi de cette portion du corps (2) pour une réception effacée du ressort de compression (10).

3. Dispositif selon l'une quelconque des revendications 1 et 2, **caractérisé en ce que** l'élément formant soupape (4) comporte trois pattes (6) longitudinales réparties de manière équiangulaire autour de la tête de soupape (5), présentant chacune une structure lamellaire allongée ou en forme de languette, le cas échéant renforcée par une nervure (12) sur sa face interne, dont la section s'accroît en direction de l'extrémité (6') et qui fournit, en association avec cette dernière, une zone d'appui à extension radiale pour le ressort de compression (10).

4. Dispositif selon l'une quelconque des revendications 1 à 3, **caractérisé en ce que** les patins de guidage (7) sont formés sur les extrémités libres (6') des pattes (6) en étant radialement proéminents vers l'extérieur et en définissant chacun un décrochement radial (7') en direction de la tête de soupape (5), lesdits décrochement (7') venant en butée contre les bords formant les limites amont (8', 9') des segments de rainures (8) ou de fentes (9) de guidage correspondants lorsque l'élément formant soupape (4) arrive en position d'ouverture calée.

5. Dispositif selon la revendication 4, **caractérisé en ce que** les décrochements radiaux (7') des extrémités libres (6') des pattes (6), d'une part, et les bords (8', 9') formant les limites amont des segments de rainures (8) ou de fentes (9) de guidage, d'autre part, présentent en section des faces frontales à inclinaisons opposées, de manière à obtenir, lorsqu'ils sont mutuellement en butée, une liaison par accrochage de crans complémentaires.

6. Dispositif selon l'une quelconque des revendications 1 à 5, **caractérisé en ce que** les pattes (6) présentent chacune, en partant de la tête de soupape (5), d'une part, une première partie droite (6") sensiblement parallèle à l'axe longitudinal (L) de l'élément en forme de soupape (4) et correspondant à la portion desdites pattes (6) qui dépasse du corps (2) lorsque l'élément en forme de soupape (4) est situé en position d'ouverture calée et, d'autre part, une seconde partie droite (6''') faisant suite à la première partie (6") et s'étendant jusqu'à l'extrémité libre (6') inclinée vers l'extérieur ou divergente par rapport à l'axe longitudinal (L) en direction de ladite extrémité (6').

7. Dispositif selon l'une quelconque des revendications 1 à 3, **caractérisé en ce que** l'étanchéité entre la tête de soupape (5) et le corps (2) en forme de manchon, en position d'obturation rétractée de l'élément formant soupape (4), est réalisée par l'intermédiaire d'un joint torique (16) monté dans une rainure circonférentielle (16') s'étendant au niveau du bord latéral inférieur de ladite tête de soupape (5) venant en appui sur une surface annulaire inclinée (17) délimitant l'ouverture amont (2') dudit corps (2) et formant siège de soupape.

8. Dispositif selon l'une quelconque des revendications 1 à 7, **caractérisé en ce que** l'étanchéité entre le corps (2) en forme de manchon tubulaire ou de douille et la portion de conduit dans laquelle il est logé est réalisé par l'intermédiaire d'un joint torique (3) monté dans une rainure circonférentielle extérieure (3') ménagée dans ledit corps (2).

9. Dispositif selon l'une quelconque des revendications 1 à 8, **caractérisé en ce que** le corps (2) en forme de manchon tubulaire et l'élément formant soupape (4) sont réalisés en un matériau synthétique rigide et chimiquement insensible au fluide gazeux qui le traverse, ledit corps (2) présentant un passage intérieur s'élargissant coniquement, selon un angle d'environ 5°, sur une partie au moins de sa portion amont (2"') s'étendant jusqu'à sa portion aval (2").

## Patentansprüche

1. Sicherheitsabsperrvorrichtung mit integriertem Durchgang, die zur Montage in einem ein gasförmiges Fluid führendes Leitungsrohr bestimmt ist und einerseits einen Körper (2) in Form einer röhrenförmigen Hülse umfasst, der ortsfest und nach außen abgedichtet in einem Rohrleitungsabschnitt installierbar ist, und andererseits ein Element (4) umfasst, das ein Ventil bildet und hinsichtlich des Körpers beweglich ist, wobei der Ventilteller (5) einen Querschnitt aufweist, der kleiner ist als der Strömungsquerschnitt des Rohrleitungsabschnitts, aber geeignet ist, eine der Öffnungen des Körpers durch Formenschluss auf undurchlässige Weise zu verschließen, und unter Wirkung einer Federkraft zu einer festen Öffnungsstellung hin beaufschlagt ist, die hinsichtlich der normalen Strömung des gasförmigen Fluids in Stromaufwärtsrichtung von der zu verschließenden Öffnung beabstandet ist, wobei in der Absperrvorrichtung (1) der Ventilteller (5) durch wenigstens drei Füße (6) verlängert ist, die sich längs der Innenwand des röhrenförmigen Hülsenkörpers (2) erstrecken und bei Verschiebung auf gleicher Höhe mit ihren mit angepassten Gleitschuhen (7) versehenen freien Enden (6') in entsprechenden Nutsegmenten (8) oder Längsschlitzsegmenten (9) geführt sind, die in der Wand eines unteren Teils (2") des Körpers (2) ausgespart sind, der an die untere Öffnung angrenzt, die der durch den Ventilteller (5) verschließbaren oberen Öffnung (2') gegenüberliegt, wobei die Federkraft durch eine in dem unteren Teil (2") des Körpers (2) montierte Schraubendruckfeder (10) erzeugt wird, deren Windungen (10') gegen die Innenwand des unteren Teils (2") angesetzt sind, und die unter Druck mit den freien Enden (6') der Füße (6) zur Anlage kommt, um das Ventil bildende Element (4) in seiner festen Öffnungsstellung zu beaufschlagen,
wobei die Vorrichtung **dadurch gekennzeichnet ist, dass**
der untere Teil (2") des röhrenförmigen Hülsenkörpers (2) aus mehreren Zungen (13) besteht, die durch Längsschlitze (13') getrennt sind, von denen einige Führungsschlitzsegmente (9) für die Gleitschuhe (7) bilden, die an den freien Enden (6') der Füße (6) des ventilförmigen Elementes (4) geformt sind, wobei jede Zunge (13) auf gleicher Höhe mit ihrem freien Ende eine Innenrandleiste (14) zur Abstützung der Druckfeder (10) und eine Außenrandleiste (14') für den Rückhalt und die Positionierung eines Klemmrings (15) aufweist, der die Zungen (13) im Innem eines begrenzenden Kreisumfangs hält.

2. Vorrichtung nach Anspruch 1, **dadurch gekennzeichnet, dass** der untere Teil (2") des Körpers (2) einen größeren Innendurchmesser aufweist als der obere Teil (2"') des Körpers (2), so dass in der Wand dieses Teils des Körpers (2) eine ringförmige Innenvertiefung (11) für eine zurückgezogene Aufnahme der Druckfeder (10) geschaffen wird.

3. Vorrichtung nach einem der Ansprüche 1 und 2, **dadurch gekennzeichnet, dass** das Ventil bildende Element (4) drei Längsfüße (6) umfasst, die im gleichen Winkel um den Ventilteller (5) herum verteilt sind und jeweils eine verlängerte Lamellenstruktur oder zungenförmige Struktur aufweisen, die ggf. auf der Innenseite durch eine Rippe (12) verstärkt ist, deren Querschnitt in Richtung des Endes (6') zunimmt und die in Verbindung mit letzterem eine Auflagezone mit radialer Erweiterung für die Druckfeder (10) bereitstellt.

4. Vorrichtung nach einem der Ansprüche 1 bis 3, **dadurch gekennzeichnet, dass** die Gleitschuhe (7) radial zur Außenseite vorspringend und jeweils unter Definition eines radialen Absatzes (7') in Richtung des Ventiltellers (5) auf den freien Enden (6') der Füße (6) geformt sind, wobei die Absätze (7') in Anschlag mit den Rändern gehen, welche die Obergrenzen (8', 9') der entsprechenden Nutsegmente (8) oder Führungsschlitzsegmente (9) bilden, wenn das Ventil bildende Element (4) an der festen Öffnungsstellung ankommt.

5. Vorrichtung nach Anspruch 4, **dadurch gekennzeichnet, dass** die radialen Absätze (7') der freien Enden (6') der Füße (6) einerseits und die Obergrenzen bildenden Ränder (8', 9') der Nutsegmente (8) oder Führungsschlitzsegmente (9) andererseits Stirnseiten mit entgegengesetzter Abschrägung aufweisen, so dass bei gegenseitigem Anschlag eine Verbindung durch komplementären Unterschnitteingriff erhalten wird.

6. Vorrichtung nach einem der Ansprüche 1 bis 5, **dadurch gekennzeichnet, dass** die Füße (6) jeweils ausgehend vom Ventilteller (5) einerseits einen ersten geraden Teil (6") aufweisen, der genau parallel zur Längsachse (L) des ventilförmigen Elementes (4) ist und der Partie der Füße (6) entspricht, die vom Körper (2) vorsteht, wenn das ventilförmige Element (4) sich in der festen Öffnungsstellung befindet, und andererseits einen zweiten geraden Teil (6"') aufweisen, der sich an den ersten Teil (6") anschließt und sich bis zu dem nach außen abgeschrägten oder hinsichtlich der Längsachse (L) divergierenden freien Ende (6') in Richtung des Endes (6') erstreckt.

7. Vorrichtung nach einem der Ansprüche 1 bis 3, **dadurch gekennzeichnet, dass** die Dichtigkeit zwischen dem Ventilteller (5) und dem hülsenförmigen Körper (2) in der zurückgezogenen Absperrstellung des Ventil bildenden Elementes (4) durch Zwischenschaltung eines O-Rings (16) realisiert ist, der in einer Umfangsnut (16') befestigt ist, die sich auf gleicher Höhe mit dem unteren Seitenrand des Ventiltellers (5) erstreckt, der auf einer ringförmigen Schrägfläche (17) aufliegt, welche die obere Öffnung (2') des Körpers (2) abgrenzt und den Ventilsitz bildet.

8. Vorrichtung nach einem der Ansprüche 1 bis 7, **dadurch gekennzeichnet, dass** die Dichtigkeit zwischen dem röhren- oder ringförmigen Hülsenkörper (2) und dem Rohrleitungsabschnitt, in dem er angeordnet ist, durch Zwischenschaltung eines O-Rings (3) realisiert ist, der in einer in dem Körper (2) ausgesparten Außenumfangsnut (3') befestigt ist.

9. Vorrichtung nach einem der Ansprüche 1 bis 8, **dadurch gekennzeichnet, dass** der röhrenförmige Hülsenkörper (2) und das Ventil bildende Element (4) aus einem steifen und gegenüber dem durchströmenden gasförmigen Fluid chemisch unempfindlichen Kunststoff hergestellt sind, wobei der Körper (2) einen Innendurchgang aufweist, der sich mit einem Winkel von ca. 5° in einem Bereich wenigstens seines oberen Teils (2"') konisch verbreitert und sich bis zum unteren Teil (2") erstreckt.

## Claims

1. Full-way safety closure device, designed to be fitted in a conduit conveying a gaseous fluid, comprising, on the one hand, a body (2) in the form of a tubular sleeve, capable of being installed in a fixed manner and with an external seal in a conduit portion, and, on the other hand, an element (4) that forms a valve and is movable relative to said body, the valve head (5) having a cross section that is smaller than the passage section of said conduit portion, but is suitable for closing in a tight manner, by mating, one of the apertures of said body, and being urged, under the effect of a resilient force, toward a wedged open position, located at a distance from the aperture to be closed in the upstream direction, relative to the normal flow of the gaseous fluid, closure device (1) in which the valve head (5) is extended by at least three legs (6) running along the internal wall of the body (2), which legs are in the form of a tubular sleeve and are guided in translation, and are provided at their free ends (6') with suitable guide rails (7), in segments of corresponding longitudinal grooves (8) or slots (9) made in the wall of an upstream portion (2") of the body (2), adjoining the downstream aperture that is remote from the downstream aperture (2') and may be closed by the valve head (5), the resilient force being produced by a helical compression spring (10) fitted in said downstream portion (2") of the body (2), the coils (10') of which are pressed against the internal wall of said downstream portion (2"), and which rests under pressure on the free ends (6') of the legs (6), in order to urge the valve-forming element (4) into its wedged open position,
device **characterised in that** the downstream portion (2") of the body (2), in the form of a tubular sleeve, comprises a plurality of tongues (13) separated by longitudinal slots (13'), some of which form segments of slots (9) for guiding the rails (7) formed on the free ends (6') of the legs (6) of the valve-forming element (4), each tongue (13) having, at its free end, an internal rim (14) for supporting the compression spring (10) and an external rim (14') for retaining and wedging a gripping ring (15) that holds the tongues (13) within a limiting circular perimeter.

2. Device according to claim 1, **characterised in that** the downstream portion (2") of the body (2) has an internal diameter that is greater than that of the upstream portion (2"') of the body (2), so as to create an internal annular recess (11) in the wall of this portion of the body (2), in order to receive the compression spring (10) in an unobtrusive manner.

3. Valve according to any one of claims 1 and 2, **characterised in that** the valve-forming element (4) comprises three longitudinal legs (6) that are distributed in an equiangular manner around the valve head (5), each having an elongated, lamellar or tongue-shaped structure, optionally reinforced by a rib (12) on its internal face, the section of which increases in the direction of the end (6'), and which provides, in association with said end, a radial extension support zone for the compression spring (10).

4. Device according to any one of claims 1 to 3, **characterised in that** the guide rails (7) are formed on the free ends (6') of the legs (6), by protruding radially outwards and by each defining a radial projection (7') in the direction of the valve head (5), said projections (7') abutting the edges forming the upstream limits (8', 9') of the corresponding segments of guiding grooves (8) or slots (9) when the valve-forming element (4) enters the wedged open position.

5. Device according to claim 4, **characterised in that** the radial projections (7') of the free ends (6') of the legs (6), on the one hand, and the edges (8', 9') forming the upstream limits of the segments of guiding grooves (8) or slots (9), on the other hand, have in section front faces at opposite angles, so that complementary notches engage when they are in mutual abutment.

6. Device according to any one of claims 1 to 5, **characterised in that**, starting from the valve head (5), the legs (6) each have, on the one hand, a first straight part (6") that is substantially parallel to the longitudinal axis (L) of the valve-forming element (4) and corresponds to the portion of said legs (6) that protrudes beyond the body (2) when the valve-forming element (4) is in the wedged open position, and, on the other hand, a second straight part (6"') that follows the first part (6") and extends up to the free end (6'), which part is outwardly inclined or diverges from the longitudinal axis (L) in the direction of said end (6').

7. Device according to any one of claims 1 to 3, **characterised in that**, in the retracted closed position of the valve-forming element (4), the seal between the valve head (5) and the body (2), in the form of a sleeve, is produced by an O-ring (16) fitted in a circumferential groove (16') extending on the lower lateral edge of said valve head (5), which rests on an inclined annual surface (17) delimiting the upstream aperture (2') of said body (2) and forming a valve seat.

8. Device according to any one of claims 1 to 7, **characterised in that** the seal between the body (2), in the form of a tubular sleeve or a bushing, and the conduit portion in which it is accommodated is produced via an O-ring (3) that is fitted in an external circumferential groove (3') made in said body (2).

9. Device according to any one of claims 1 to 8, **characterised in that** the body (2), in the form of a tubular sleeve, and the valve-forming element (4) are made of a rigid synthetic material that is chemically insensitive to the gaseous fluid passing through it, said body (2) having an internal passage that widens conically, at an angle of approximately 5°, over at least a part of its upstream portion (2"'), extending to its downstream portion (2").
